# EUROPEAN PATENT APPLICATION

(11) **EP 4 614 675 A1**
(43) Date of publication of application: **10.09.2025**
(21) Application number: 24212820.5
(22) Date of filing: 13.11.2024
(51) Int. Cl.: H01M 10/613, H01M 10/647, H01M 10/6554, H01M 50/204, H01M 50/209, H01M 50/289

(54) **BATTERY MODULE**

(30) Priority: 04.03.2024 KR 20240030982
(71) Applicant: Samsung SDI Co., Ltd., Giheung-gu Yongin-si, Gyeonggi-do 17084 (KR)
(72) Inventor: WOO, Minuk, 17084 Yongin-si (KR); KWAG, Nohyun, 17084 Yongin-si (KR); PARK, Daeyeop, 17084 Yongin-si (KR); YOON, Seokbin, 17084 Yongin-si (KR); LEE, Jeongmin, 17084 Yongin-si (KR); HWANG, Kum-Yul, 17084 Yongin-si (KR)
(74) Representative: Marks & Clerk LLP

(57) **Abstract**

A battery module (800) includes: a first battery cell (812); a first case (130, 410) to accommodate the first battery cell (812), and having a first through region (832) to expose a portion of a surface of the first battery cell (812) therethrough; a second case (140, 420) to accommodate at least a portion of the first case (130, 410); and a first heat conducting member (822) between the first battery cell (812) and the second case (140, 420).

## Description

### BACKGROUND

### 1. Field

Aspects of embodiments of the present disclosure relate to a battery module having improved heat dissipation performance.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

The secondary battery may generate heat during discharge and/or charge. In a case where the heating persists, the secondary battery may undergo a thermal runaway, which may cause a fire in a device or a vehicle equipped with the secondary battery.

The above information disclosed in this Background section is for enhancement of understanding of the background of the present disclosure, and therefore, it may contain information that does not constitute related (or prior) art.

### SUMMARY

One or more embodiments of the present disclosure may be directed to a battery module having improved heat dissipation performance.

These and other aspects and features of the present disclosure will be described in or will be apparent from the following description of embodiments of the present disclosure.

According to one or more embodiments of the present disclosure, a battery module includes: a first battery cell; a first case configured to accommodate the first battery cell, and having a first through region to expose a portion of a surface of the first battery cell therethrough; a second case configured to accommodate at least a portion of the first case; and a first heat conducting member between the first battery cell and the second case.

In an embodiment, a first surface of the first heat conducting member may be in direct contact with a portion of a surface of the first battery cell exposed through the first through region, and a second surface of the first heat conducting member may be in contact with the second case.

In an embodiment, the first heat conducting member may be located in the first through region of the first case.

In an embodiment, an area of the first through region may be smaller than an area of a first surface of the first battery cell.

In an embodiment, a length of a long side of the first through region may be shorter than a length of a long side of a first surface of the first battery cell, and a length of a short side of the first through region may be shorter than a length of a short side of the first surface of the first battery cell.

In an embodiment, the first case may be configured to accommodate a plurality of battery cells including the first battery cell, the first case may have a plurality of through regions including the first through region, each of the through regions may correspond to a single battery cell from among the plurality of battery cells, and a plurality of heat conducting members including the first heat conducting member may be located in the through regions, respectively.

In an embodiment, the first case may be configured to accommodate a plurality of battery cells including the first battery cell, the first case may have a plurality of through regions including the first through region, each of the through regions may correspond to two or more battery cells from among the plurality of battery cells, and a plurality of heat conducting members including the first heat conducting member may be located in the through regions, respectively.

In an embodiment, a thickness of the first heat conducting member may be thicker than a thickness of the first case having the first through region.

In an embodiment, the first case may include an insulating material.

In an embodiment, the second case may include a metal.

In an embodiment, the battery module may further include: a second battery cell; and a second heat conducting member between the second battery cell and the second case. The second case may have a second through region to expose a portion of a surface of the second battery cell therethrough.

According to one or more embodiments of the present disclosure, a method of assembling a battery module, includes: preparing a first case for accommodating a battery cell, and having a through region to expose a portion of a surface of the battery cell therethrough; preparing a second case having an internal space for accommodating at least a portion of the first case; coupling the first case and the second case together so that the first case is seated in the internal space of the second case; disposing a heat conducting member in the through region of the first case; and seating the battery cell in the first case to be disposed on the through region.

In an embodiment, in the seating of the battery cell in the first case, a first surface of the heat conducting member may be in direct contact with a portion of a surface of the battery cell exposed through the through region, and a second surface of the heat conducting member may be in contact with the second case.

In an embodiment, in the preparing of the first case, the through region may be formed in the first case so that an area of the through region may be smaller than an area of a first surface of the battery cell.

In an embodiment, in the preparing of the first case, the through region may be formed in the first case so that a length of a long side of the through region may be shorter than a length of a long side of a first surface of the battery cell, and a length of a short side of the through region may be shorter than a length of a short side of the first surface of the battery cell.

In an embodiment, the first case may be configured to accommodate a plurality of battery cells including the battery cell, the first case may have a plurality of through regions including the through region, each of the through regions may correspond to a single battery cell from among the plurality of battery cells, and a plurality of heat conducting members including the heat conducting member may be disposed in the through regions, respectively.

In an embodiment, the first case may be configured to accommodate a plurality of battery cells including the battery cell, the first case may have a plurality of through regions including the through region, each of the through regions may correspond to two or more battery cells from among the plurality of battery cells, and a plurality of heat conducting members including the heat conducting member may be disposed in the through regions, respectively.

In an embodiment, a thickness of the heat conducting member may be thicker than a thickness of the first case having the through region.

In an embodiment, the first case may include an insulating material.

In an embodiment, the second case may include a metal.

According to some embodiments of the present disclosure, the heat conducting member may be disposed between a battery cell and the metal case, and heat generated by the battery cell may be dissipated to the outside through the heat conducting member and the case.

According to some embodiments of the present disclosure, with the through regions being provided in the casing and the heat conducting members being disposed in the through regions, a larger area of the heat conducting members may be in contact with the battery cells. With the increase in the area where the battery cells are in contact with the heat conducting members, the heat dissipation effect of the battery cells may be improved.

According to some embodiments of the present disclosure, the case may be used as a heat sink, thereby increasing the heat capacity.

According to some embodiments of the present disclosure, as the battery cells are seated in the internal space of a combined structure of the first case associated with insulation and the second case associated with heat dissipation, both insulation and heat dissipation for the battery cells may be achieved.

However, aspects and features of the present disclosure are not limited to those described above, and other aspects and features not mentioned will be clearly understood by a person skilled in the art from the detailed description, described below.

At least some of the above and other features of the invention are set out in the claims.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 illustrates an exploded perspective diagram showing a battery module according to one or more embodiments of the present disclosure;
FIG. 2 illustrates a perspective view showing a secondary battery according to one or more embodiments of the present disclosure;
FIG. 3 is a cross-sectional view taken along the line II-II in FIG. 2;
FIG. 4 illustrates a perspective view showing a first case and a second case according to one or more embodiments of the present disclosure;
FIG. 5 illustrates a perspective diagram showing a coupled state of the first case and the second case according to one or more embodiments of the present disclosure;
FIG. 6 illustrates a plan diagram showing the coupled state of the first case and the second case according to one or more embodiments of the present disclosure;
FIG. 7 illustrates a state where heat conducting members are disposed in a plurality of through regions according to one or more embodiments of the present disclosure;
FIG. 8 illustrates an example of a battery module in which a plurality of battery cells are inserted in the first case in a state where the first case and the second case are coupled together according to one or more embodiments of the present disclosure;
FIG. 9 illustrates through regions having various shapes according to one or more embodiments of the present disclosure;
FIGS. 10 illustrates a battery pack according to one or more embodiments of the present disclosure;
FIGS. 11 illustrates a battery pack according to one or more embodiments of the present disclosure;
FIGS. 12 illustrates a vehicle body and vehicle body parts having a battery pack according to one or more embodiments of the present disclosure;
FIGS. 13 illustrates a vehicle body and vehicle body parts having a battery pack according to one or more embodiments of the present disclosure; and
FIG. 14 illustrates a flowchart showing a method of assembling a secondary battery module according to one or more embodiments of the present disclosure.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of' and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of 35 U.S.C. § 112(a) and 35 U.S.C. § 132(a).

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

A battery pack according to one or more embodiments includes at least one battery module and a pack housing having an accommodation space in which the at least one battery module is accommodated.

The battery module may include a plurality of battery cells and a module housing. The battery cells may be accommodated inside the module housing in a stacked form (or stacked arrangement or configuration). Each battery cell may have a positive electrode terminal and a negative electrode terminal and may be a circular type, a prismatic type, or a pouch type according to the shape of battery. In the present specification, a battery cell may also be referred to as a secondary battery, a battery, or a cell.

In the battery pack, one cell stack may constitute one module stacked in place of the battery module. The cell stack may be accommodated in an accommodation space of the pack housing or may be accommodated in an accommodation space partitioned by a frame, a partition wall, etc.

The terms used herein are intended to describe embodiments of the present disclosure, and are not intended to limit the present disclosure.

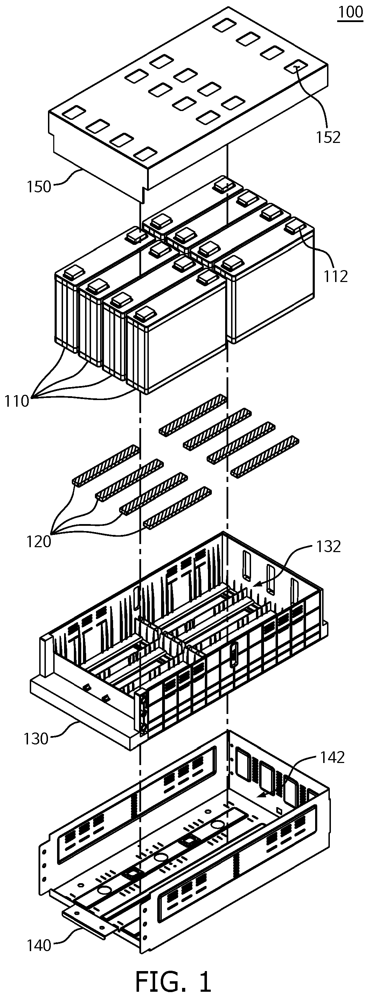

FIG. 1 illustrates an exploded perspective diagram showing a battery module 100 according to one or more embodiments of the present disclosure. For example, the battery module 100 may be a secondary battery module. Referring to FIG. 1, the battery module 100 may include a plurality of battery cells 110, heat conducting members 120, a first case 130, a second case 140, and a module cover 150.

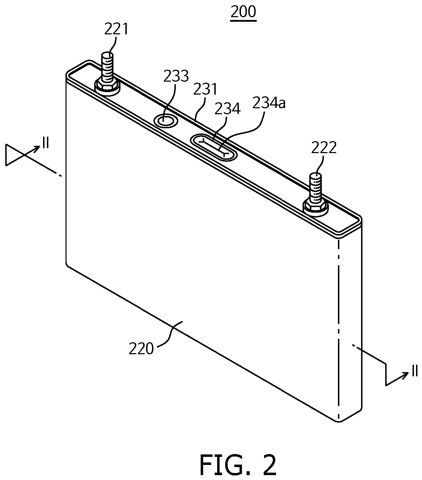

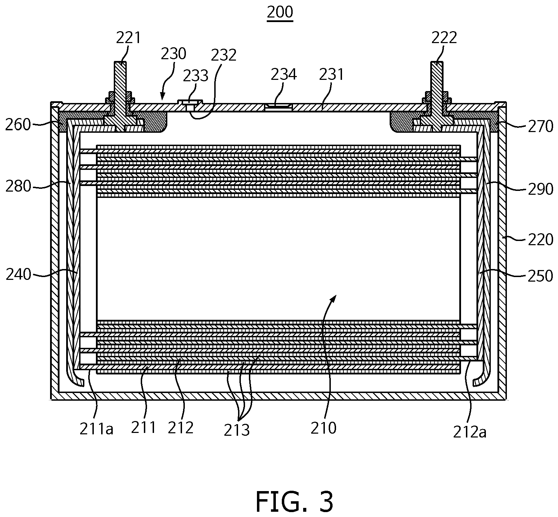

The battery cells 110 are chargeable and dischargeable, and may generate heat during charge/discharge. The configuration of the battery cells 110 will be described in more detail below with reference to FIG. 2 and FIG. 3.

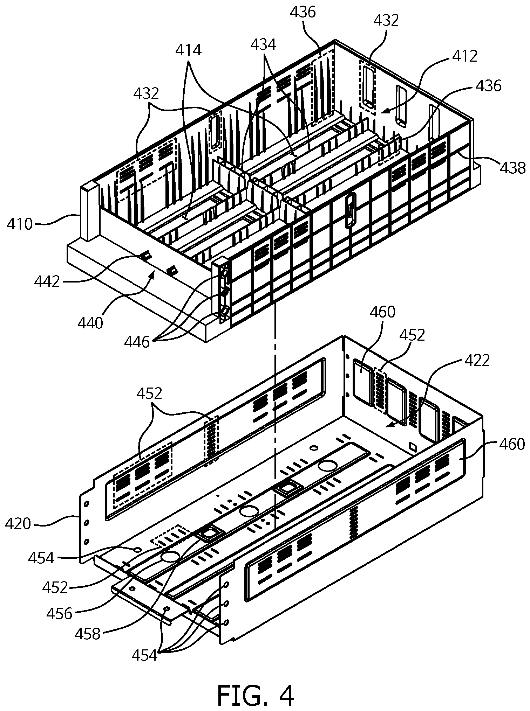

In the first case 130, a first internal space 132 may be formed to accommodate the battery cells 110, and the battery cells 110 may be seated in the first internal space 132. Further, in the first case 130, a plurality of through regions may be formed to expose a portion of the surface of the battery cells 110. The size/area of each of the through regions may be smaller than the size/area of the bottom surface of each of the battery cells. In addition, the first case 130 may have a plurality of heat exhaust holes (e.g., 432 in FIG. 4).

According to an embodiment, the first case 130 may include an insulating material. For example, the first case 130 may include at least one of polycarbonate, polyester, polyamide, and/or the like.

The second case 140 may have a second internal space 142 formed to accommodate at least a portion of the first case 130. The first case 130 may be seated in the second internal space 142 of the second case 140 to be connected to (e.g., coupled to or attached to) the second case 140. In addition, the second case 140 may have a plurality of heat exhaust holes (e.g., 452 in FIG. 4).

According to an embodiment, the second case 140 may include (e.g., may be made of) a metal having a high thermal conductivity. For example, the second case 140 may include at least one of aluminum (Al), an Al alloy, an Al oxide, steel, and/or the like.

The heat conducting members 120 may be disposed between the battery cells 110 and the second case 140. For example, the heat conducting members may be heat conducting sheets, a heat conducting layer, or the like. In this case, in each of the heat conducting members 120, a first surface may be in direct contact with a first surface of a corresponding battery cell (e.g., the bottom surface of the corresponding battery cell), and a second surface may be in direct contact with the second case 140. As such, the heat conducting members 120 may transfer heat from the battery cells 110 to the second case 140. The heat conducting members 120 may include (e.g., may be made of) a suitable material having a high thermal conductivity. For example, the heat conducting members 120 may be silicone sheets, acrylic sheets, urethane sheets, graphite sheets, and/or the like having a high thermal conductivity. Herein, the heat conducting members 120 may be made of an electrically-insulating material.

In a state where the battery cells 110 are disposed inside the first case 130, and the first case 130 is connected to (e.g., coupled to or attached to) the second case 140, the module cover 150 may be connected to (e.g., coupled to or attached to) the first case 130 and the top portion of the second case 140. The module cover 150 may have a plurality of through-holes 152 through which electrode terminals 112 disposed on the top surfaces of the battery cells 110 may extend.

The material of the module cover 150 may be a resin material. For example, the module cover 150 may include (e.g., may be made of) a thermoplastic resin, such as polycarbonate, polyethylene, polypropylene, acrylonitrile butadiene styrene (ABS) resin, polyamide, nylon, or polyaryletherketone (PEEK), but the material of the module cover 150 is not limited to the foregoing examples. In addition, not only one type of material but a mixture of two or more types of materials may be used as the resin material.

In FIG. 1, the battery cells 110 are shown as prismatic cells, but the present disclosure is not limited thereto. For example, the battery cells 110 may be other kinds of battery cells, such as cylindrical cells and pouch cells.

The first case 130 may act as an insulator and the second case 140 may act as a heat sink, thereby providing both insulation and heat dissipation for the battery cells 110.

FIG. 2 illustrates a perspective view showing a secondary battery according to one or more embodiments of the present disclosure, and FIG. 3 is a cross-sectional view taken along the line II-II in FIG. 2. Hereinafter, a secondary battery 200 may correspond to the battery cells 110 in FIG. 1.

Referring to FIGS. 2 and 3, the secondary battery 200 according to one or more embodiments of the present disclosure may include at least one electrode assembly 210 wound with a separator 213 as an insulator between the positive electrode 211 and the negative electrode 212, a case 220 in which the electrode assembly 210 is received (or accommodated) therein, and a cap assembly 230 coupled to an opening of the case 220.

The secondary battery 200 according to one or more embodiments illustrated in FIGS. 2 and 3 will now be described as an example of a prismatic lithium ion secondary battery. However, the present disclosure is not limited thereto, and suitable aspects, features and principles described herein may be applied to various other types of batteries, such as lithium polymer batteries and/or cylindrical batteries.

Each of the positive electrode 211 and the negative electrode 212 may include a current collector made of a thin metal foil having a coated portion on which an active material is coated and an uncoated portion 211a, 212a on which an active material is not coated.

The positive electrode 211 and the negative electrode 212 are wound after interposing the separator 213, which is an insulator, therebetween. However, the present disclosure is not limited thereto, and the electrode assembly 210 may have a structure in which a positive electrode 211 and a negative electrode 212, each made of a plurality of sheets, are alternately stacked with a separator interposed therebetween.

The case 220 may form the overall outer appearance of the secondary battery 200 and may be made of a conductive metal, such as aluminum, aluminum alloy, or nickel-plated steel. In addition, the case 220 may provide a space in which the electrode assembly 210 is accommodated.

The cap assembly 230 may include a cap plate 231 covering an opening in the case 220, and the case 220 and the cap plate 231 may be made of a conductive material. The positive and negative electrode terminals 221 and 222 electrically connected to the positive electrode 211 and the negative electrode 212, respectively, may be installed to penetrate (or extend through) the cap plate 231 and protrude outwardly therethrough.

In addition, outer peripheral surfaces (e.g., circumferential surfaces) of upper pillars of the positive and negative electrode terminals 221 and 222 protruding outwardly from the cap plate 231 may be threaded and may be fixed to the cap plate 231 by utilizing nuts.

However, the present disclosure is not limited thereto, and the positive and negative electrode terminals 221 and 222 may have a rivet structure and may be riveted or welded to the cap plate 231.

In addition, the cap plate 231 may be made of a thin plate and may be coupled to the opening in the case 220, and an electrolyte injection port 232 into which a sealing stopper 233 may be installed may be located (e.g., formed) in the cap plate 231, and a vent portion 234 having a notch 234a may be installed.

The positive and negative electrode terminals 221 and 222 may be electrically connected to current collectors including first and second current collectors 240 and 250 (hereinafter referred to as positive and negative current collectors) by being bonded or coupled (e.g., by welding) to the positive uncoated portion 211a and the negative electrode uncoated portion 212a, respectively.

For example, the positive and negative electrode terminals 221 and 222 may be coupled by welding to the positive and negative electrode current collectors 240 and 250, respectively. However, the present disclosure is not limited thereto, and the positive and negative electrode terminals 221 and 222 and the positive and negative electrode current collectors 240 and 250 may be integrally formed in one or more embodiments.

In addition, an insulation member may be installed between the electrode assembly 210 and the cap plate 231. The insulation member may include first and second lower insulation members 260 and 270, and each of the first and second lower insulation members 260 and 270 may also have a portion located between the electrode assembly 210 and the case 220.

In addition, according to one or more embodiments of the present disclosure, one end of a separation member may face one side of the electrode assembly 210 and may be installed between the insulation member and the positive or negative electrode terminals 221 and 222.

In one or more embodiments, the separation member may include first and second separation members 280 and 290.

In such an embodiment, first ends of the first and second separation members 280 and 290 installed to face one side of the electrode assembly 210 may be respectively installed between the first and second lower insulation members 260 and 270 and the positive and negative electrode terminals 221 and 222.

Accordingly, the positive and negative electrode terminals 221 and 222, which may be coupled by welding to the positive and negative electrode current collectors 240 and 250, may be coupled to first ends of the first and second lower insulation members 260 and 270 and the first and second separation members 280 and 290.

FIG. 4 illustrates a perspective view showing a first case 410 and a second case 420 according to one or more embodiments of the present disclosure. The first case 410 in FIG. 4 may correspond to the first case 130 described above with reference to FIG. 1, and the second case 420 in FIG. 4 may correspond to the second case 140 described above with reference to FIG. 1.

According to an embodiment, the first case 410 may be provided with a first internal space 412 for accommodating at least one battery cell. A plurality of through regions 414 may be formed in the bottom surface of the first case 410 within the first internal space 412.

According to an embodiment, the area of each of the through regions 414 may be smaller than the area of a first surface (e.g., a bottom side) of the corresponding battery cell. In addition or in another example, the length of the long sides of each of the through regions 414 may be shorter than the length of the long sides of the first surfaces of the battery cells. In addition or in another example, the length of the short sides of the through regions 414 may be shorter than the length of the short sides of the first surface of the battery cells. As such, the battery cells may be fixed within the first internal space 412 of the first case 410.

According to an embodiment, the number of the through regions 414 may be equal to the number of the battery cells accommodated in the first internal space 412. In some embodiments, the number of the through regions 414 may be less than or greater than the number of the battery cells accommodated in the first internal space 412.

According to an embodiment, the first case 410 may include a plurality of heat exhaust holes 432. For example, the heat exhaust holes 432 may be provided on side surfaces and/or the bottom surface of the first case 410. The positions of the heat exhaust holes 432 of the first case 410 may correspond to the positions of the heat exhaust holes 452 of the second case 420. The heat exhaust holes 432 of the first case 410 are shown as having a shape of elliptical through-holes, but the present disclosure is not limited thereto, and the heat exhaust holes 432 may have any suitable shape.

According to an embodiment, the first case 410 may be provided with compartment walls 434 to define regions in which the battery cells are to be disposed. For example, the compartment walls 434 may be formed by protruding from the bottom surface of the first case 410. In an embodiment, the compartment walls 434 may be configured such that one battery cell is disposed in each of the regions defined by the compartment walls 434. In another embodiment, the compartment walls 434 may be configured such that two or more battery cells are disposed in each of the regions defined by the compartment walls 434.

According to an embodiment, the first case 410 may be provided with guide protrusions 436 to guide the mounting of the battery cells. For example, the guide protrusions 436 may be provided on the side surfaces of the first case 410 and/or on opposite sides of the compartment walls 434. In addition, the guide protrusions 436 may structurally reinforce the first case 410. The first case 410 may be provided with the through regions 414 at (e.g., in or on) which the heat conducting members are to be disposed, and a plurality of through-holes for forming the heat exhaust holes 432, and thus, structural reinforcement may be desired. Accordingly, the guide protrusions 436 may be formed on the side surfaces of the first case 410 and/or on the opposite sides of the compartment walls 434 to protrude outwardly, thereby structurally reinforcing the first case 410.

In addition, support protrusions 438 may be provided on the first case 410 to structurally reinforce the first case 410. For example, the support protrusions 438 may be provided by protruding outwardly in a grid-like pattern from the side surfaces of the first case 410.

According to an embodiment, a space 440 may be formed in the first case 410 in which a battery management module (e.g., a battery management system) is disposed. Further, the first case 410 may include an engagement member (e.g., a coupling member) 442 formed for connecting (e.g., coupling or attaching) with the battery management module. The number, the shape, and the positions of the engagement members 442 for connecting (e.g., coupling or attaching) with the battery management module are not limited to the example shown in FIG. 4, and they may be provided in different numbers, shapes, and positions as needed or desired.

According to an embodiment, the second case 420 may be provided with a second internal space 422 that may accommodate at least a portion of the first case 410. The first case 410 and the second case 420 may be connected (e.g., coupled or attached) together, such that the first case 410 is seated in the second internal space 422 provided in the second case 420.

In more detail, the first case 410 and the second case 420 may each be provided with a coupling member, and may be coupled/fixed together using the coupling members. In an embodiment, the first case 410 and the second case 420 may include engagement holes 446 and 454 for screw engagement. For example, the first case 410 and the second case 420 may have the engagement holes 446 and 454 for allowing screws to be inserted at corresponding positions in the coupling.

In an embodiment, one or more engagement protrusions may be provided on an outer surface of the first case 410 (e.g., on a lower portion of the first case 410), and engagement grooves 458 may be provided on an inner surface of the second case 420 at positions corresponding to the engagement protrusions. In this case, the engagement protrusions of the first case 410 may be inserted into the engagement grooves 458 of the second case 420, thereby allowing the first case 410 and the second case 420 to be connected (e.g., coupled or attached) together.

In an embodiment, the first case 410 and the second case 420 may be coupled/fixed together in a hook engagement manner. For example, the engagement protrusions of the first case 410 may include a clasp. In this case, the first case 410 and the second case 420 may be coupled/fixed together, such that the clasps of the engagement protrusions of the first case 410 are inserted into the engagement grooves 458 of the second case 420. The manner in which the first case 410 and second case 420 are connected (e.g., coupled or attached) together is not limited to the examples described above, and they may be connected (e.g., coupled or attached) together in various suitable manners.

In an embodiment, protrusions may be provided on an outer surface of the first case 410 (e.g., on a lower portion of the first case 410) to guide engagement positions between the first case 410 and the second case 420. On an inner surface of the second case 420, through-holes 456 may be formed at positions corresponding to the protrusion. The through-holes 456 of the second case 420 may have a shape corresponding to the protrusions of the first case 410. In this case, the protrusions of the first case 410 may be inserted into the through-holes 456 of the second case 420 to guide the engagement positions of the first case 410 and the second case 420.

According to an embodiment, the second case 420 may include a plurality of heat exhaust holes 452. For example, the heat exhaust holes 452 may be provided on side surfaces and/or the bottom surface of the second case 420. The positions of the heat exhaust holes 452 of the second case 420 may correspond to the positions of the heat exhaust holes 432 of the first case 410. The heat exhaust holes 452 of the second case 420 are shown as having a shape of elliptical through-holes, but the present disclosure is not limited thereto, and the heat exhaust holes 452 may have various suitable shapes.

According to an embodiment, convex portions 460 may be provided on the second case 420 to structurally reinforce the second case 420. For example, the convex portions 460 may be provided so that portions of the inner surfaces of the second case 420 protrude inwardly, and portions of the outer surfaces of the second case 420 protrude outwardly.

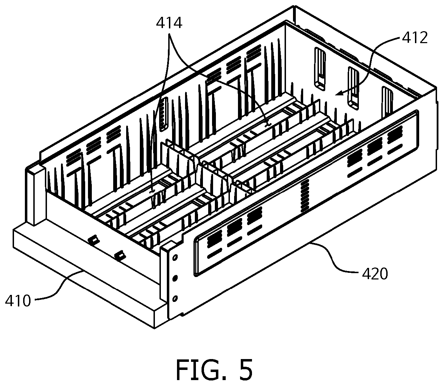

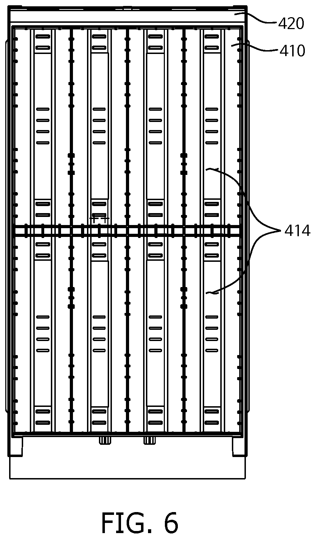

FIG. 5 illustrates a perspective diagram showing a coupled state of the first case 410 and the second case 420 according to one or more embodiments of the present disclosure. FIG. 6 illustrates a plan diagram showing the coupled state of the first case 410 and the second case 420 according to one or more embodiments of the present disclosure.

Referring to FIG. 5 and FIG. 6, when the first case 410 and the second case 420 are connected (e.g., coupled or attached) together, portions of the second case 420 may be exposed to the first internal space 412 through the through regions 414. In

FIG. 5 and FIG. 6, eight rectangular through regions 414 having the same size as each other are shown as being formed in the first case 410. However, the shape, the size, and the number of the through regions 414 are not limited thereto.

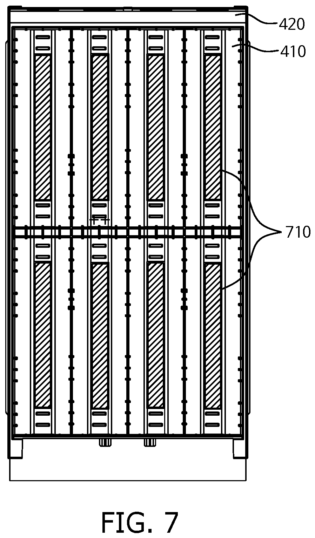

FIG. 7 illustrates a state where heat conducting members 710 are disposed in a plurality of through regions according to one or more embodiments of the present disclosure. As shown in FIG. 7, the heat conducting members 710 may be disposed within the through regions 414 (e.g., see FIG. 6) formed in the first case 410. Herein, the number of the through regions 414 may be the same as the number of the heat conducting sheets of the heat conducting members 710. Further, the through regions may correspond to the battery cells.

In an embodiment, the length of the long sides of the heat conducting members 710 may be shorter than or equal to the length of the long sides of the through regions 414, and the length of the short sides of the heat conducting members 710 may be shorter than or equal to the length of the short sides of the through regions 414. Accordingly, each of the heat conducting members 710 may be accommodated within a corresponding one of the through regions 414, and may be in direct contact with the second case 420.

According to an embodiment, the thickness of the heat conducting members 710 may be thicker than the thickness of the first case 410 in which the through regions 414 are provided. Accordingly, the second surfaces opposite the first surfaces of the heat conducting members 414 that are in direct contact with the second case 420 may be in direct contact with the first surfaces (e.g., the bottom sides) of the battery cells.

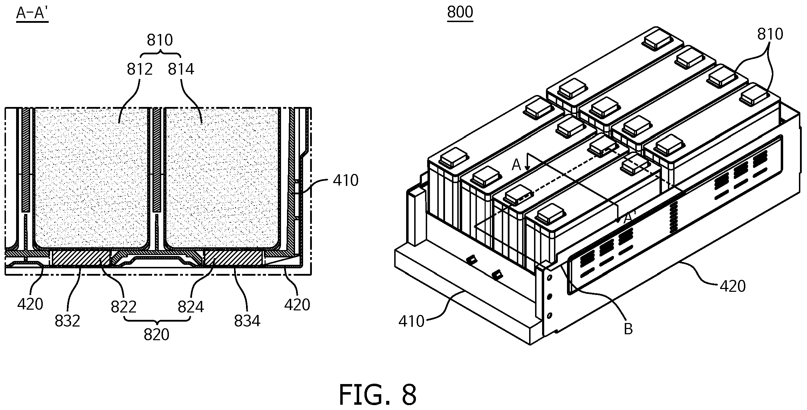

FIG. 8 illustrates an example of a battery module 800 in which a plurality of battery cells 810 are inserted in the first case 410 in a state where the first case 410 and the second case 420 are coupled together according to one or more embodiments of the present disclosure. The A-A' cross-sectional view of FIG. 8 illustrates the cross-section taken along the line A-A' of the region B of the battery module 800 shown in FIG. 8. The battery cells 810 shown in FIG. 8 may correspond to the battery cells 110 described above with reference to FIG. 1.

Referring to FIG. 8, the battery cells 810 may be seated in a first internal space defined in the first case 410 in which a plurality of heat conducting members 820 are disposed in the through regions. Accordingly, first surfaces of the heat conducting members 820 may be in direct contact with portions of the surfaces of the battery cells 810 that are exposed through the through regions, and second surfaces of the heat conducting members 820 may be in contact with the second case 420. For example, from among the heat conducting members 820, a first heat conducting member 822 may be disposed in a first through region 832, a first surface of the first heat conducting member 822 may be in direct contact with a surface of a first battery cell 812 exposed through the first through region 832, and a second surface of the first heat conducting member 822 may be in contact with the second case 420. Further, from among the heat conducting members 820, a second heat conducting member 824 may be disposed in a second through region 834, a first surface of the second heat conducting member 824 may be in direct contact with an exposed surface of a second battery cell 814 through the second through region 834, and a second surface of the second heat conducting member 824 may be in contact with the second case 420.

As described above, heat generated by the battery cells 810 may be dissipated outwardly through the second case 420 by means of the heat conducting members 820. In more detail, as the battery cells 810 are surrounded (e.g., around peripheries thereof) by the first case 410 including an insulating material having a low thermal conductivity, heat may be generated and temperature may rise in the first internal space (e.g., 132 in FIG. 1) in which the battery cells 810 are positioned. However, according to one or more embodiments of the present disclosure, the temperature of the battery cells 810 seated in the first case 410 may be lowered, because heat from the battery cells 810 may be transferred to and dissipated outwardly through the heat conducting members 820 and the second case 420.

In addition, as the through regions 832 and 834 are formed in the first case 410, and the heat conducting members 820 are disposed in the through regions 832 and 834, a larger area of the heat conducting members 820 may be in contact with the battery cells 810. Further, as the area of each of the through regions 832 and 834 and each of the heat conducting members 820 are increased, a larger area of single heat conducting members 822 and 824 may be in contact with single battery cells. With the increase in the total area over which the battery cells 810 are in contact with the heat conducting members 820, the heat dissipation effect of the battery cells may be improved.

Further, a plurality of holes having various suitable shapes may be provided in the first case 410 and the second case 420. Through the holes, heat from the battery cells 810 may be dissipated outwardly.

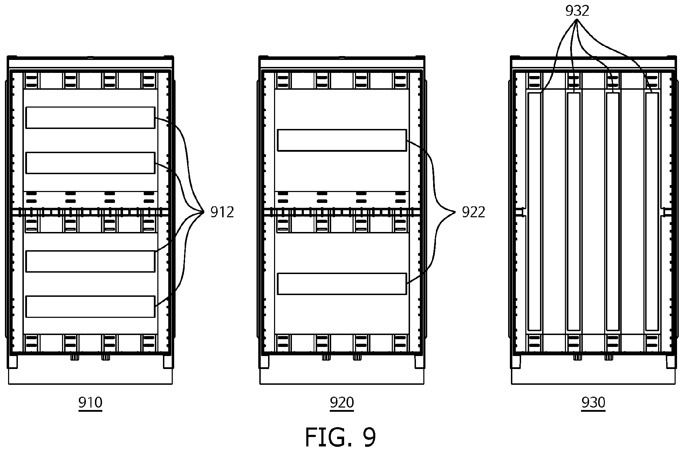

FIG. 9 illustrates through regions having various shapes according to one or more embodiments of the present disclosure. First to third examples 910 to 930 in FIG. 9 illustrate through regions 912, 922, and 932, respectively, corresponding to two or more battery cells. In order to obtain a sufficient heat dissipation effect, the area of the through regions 912, 922, and 932 may be set so that the area where the heat conducting members and the battery cells are in contact with each other is at least a suitable sized area (e.g., a predetermined area). As the number of through regions is less than the number of battery cells, the process of forming the through regions in the first case and the process of preparing and arranging the heat conducting members may be simplified.

Referring to the first example 910, a plurality of through regions 912 having a wider transverse width and a narrower longitudinal width may be formed in the first case. In this case, first surfaces (e.g., longitudinal sides) of the through regions 912 may be shorter than first surfaces of the battery cells, and second surfaces (e.g., transverse sides) of the through regions 912 may be longer than second surfaces of the battery cells. Because the first surfaces of the through regions 912 are shorter than the first surfaces of the battery cells, the battery cells may be seated without passing through the through regions 912. In the first example 910, the respective through regions may correspond to four battery cells. In this case, portions of the surfaces of the cells may be exposed through the individual through regions. In the first example 910, portions of the surface of the four battery cells are shown as exposed through a pair of through regions 912. The area of contact between the battery cells and the heat conducting members disposed in the through regions 912 may be equal to or greater than a predetermined area.

Referring to the second example 920, the respective through regions 922 may correspond to four battery cells. In this case, surface portions of a plurality of cells may be exposed through a single through region 922. In the second example 920, portions of the surfaces of the four battery cells are shown as exposed through the single through region 922. The area of contact between the battery cells and the heat conducting members disposed in the through regions 922 may be equal to or greater than a predetermined area.

Referring to the third example 930, first surfaces (e.g., longitudinal sides) of the through regions 932 may be longer than first surfaces of the battery cells, and second surfaces (e.g., transverse sides) of the through regions 932 may be shorter than second surfaces of the battery cells. Because the second surfaces of the through regions 932 are shorter than the second surfaces of the battery cells, the battery cells may be seated without passing through the through regions 932. In the third example 930, the respective through regions 932 may correspond to two battery cells. In this case, portions of the surfaces of the cells may be exposed through the respective through regions 932. In the third example 930, portions of the surfaces of the two battery cells are shown as exposed through a single through region 932. The area of contact between the battery cells and the heat conducting members disposed in the through regions 932 may be equal to or more than a predetermined area.

In the first example 910, the second example 920, and the third example 930, a plurality of heat conducting members corresponding to the sizes of the respective corresponding through regions may be disposed in the through regions.

In addition, a plurality of through regions may correspond to a single battery cell. In order to obtain a sufficient heat dissipation effect even in this case, the area of the through regions may be set so that the area in contact between the heat conducting members and the battery cells is equal to or more than a predetermined area. In an embodiment, a greater number of through regions than the number of battery cells may be provided in the first case. For example, based on the number of battery cells, through regions corresponding to a multiple of n (where n is a real number exceeding 1) may be provided in the first case. In this case, a surface of a single battery cell may be exposed through a plurality of through regions, and each of the through regions may have a smaller size compared to that of the example described above with reference to FIG. 6. For example, when a surface of a single battery cell is exposed through a pair of through regions, the total area of the pair of through regions may be smaller than the area of a first surface (e.g., the bottom side) of the battery cell.

In the embodiments described above, the through regions are illustrated as having a rectangular shape, but the present disclosure is not limited thereto, and through regions having various suitable shapes may be provided in the first case. For example, the first case may be provided with through regions having a suitable shape, such as a polygon or a circle, and having a suitable size so that the battery cells may be seated without passing through. Further, heat conducting members having a suitable shape, such as a polygon or a circle, may be disposed in the through regions. The shape of the through regions may be determined differently depending on the battery type (e.g., a prismatic type, a cylindrical type, or a pouch type).

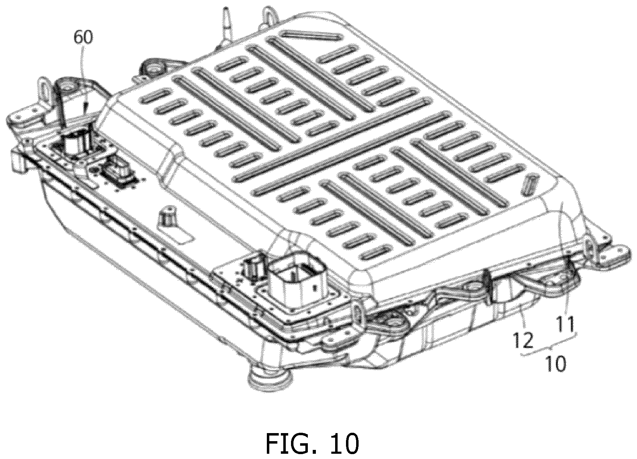

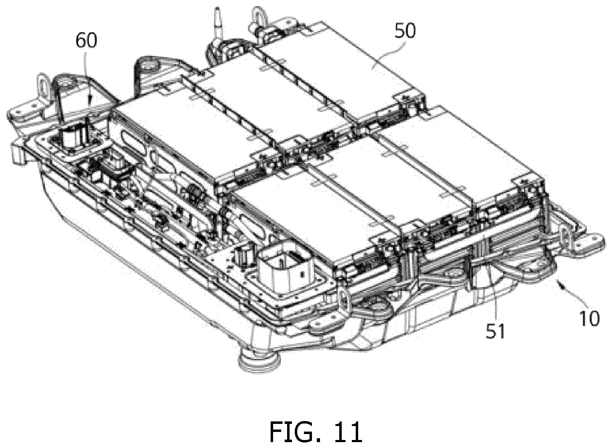

FIGS. 10 and 11 illustrate a battery pack according to one or more embodiments of the present disclosure.

The battery pack may include a plurality of battery modules 50 and a housing 10 for accommodating the battery modules 50. For example, the housing 10 may include first and second housings 11 and 12 coupled in opposite directions through the battery modules 50. The battery modules 50 may be electrically connected to each other by using a bus bar 51, and the battery modules 50 may be electrically connected to each other in a series/parallel or series-parallel mixed method, thereby obtaining desired (e.g., required) electrical output.

The battery pack may include a high-voltage connector 60 exposed to the outside of the housing 10. For example, the high-voltage connector 60 may be provided on a first housing 11 forming the upper portion of the housing 10. The battery pack may provide a drive power source for vehicles, and the high-voltage connector 60 may form an output terminal for supplying the drive power source.

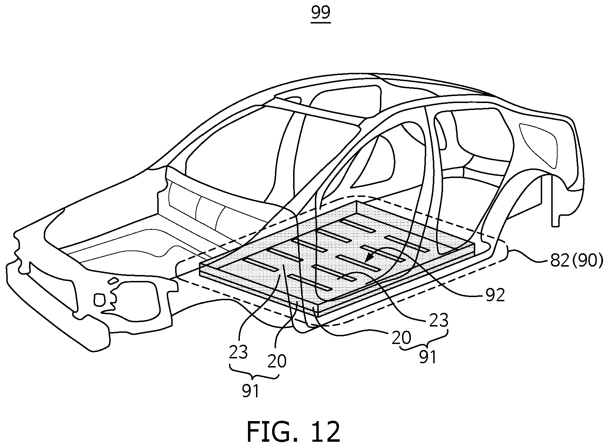

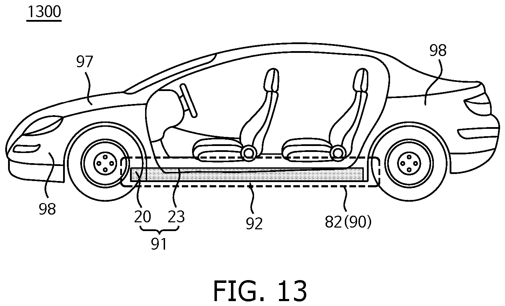

FIGS. 12 and 13 illustrate a vehicle body and vehicle body parts having a battery pack according to one or more embodiments of the present disclosure.

In FIG. 12, a battery pack 91 may include a battery pack cover 23, which is a part of a vehicle underbody 92, and a pack frame 20 disposed under the vehicle underbody 92. The pack frame 20 and the battery pack cover 23 may be integrally formed with a vehicle floor 82.

The vehicle underbody 92 separates the inside and outside of a vehicle, and the pack frame 20 may be disposed outside the vehicle.

FIG. 13 illustrates a schematic side view of a vehicle according to one or more embodiments of the present disclosure.

A vehicle 1300 may be formed by combining additional parts, such as a hood 97 in front of the vehicle and fenders 98 respectively located in the front and rear of the vehicle to a vehicle body 99.

The vehicle 1300 may further include a vehicle floor 82, which is one of the vehicle body parts 90 including the battery pack 91 including the pack frame 20 and the battery pack cover 23.

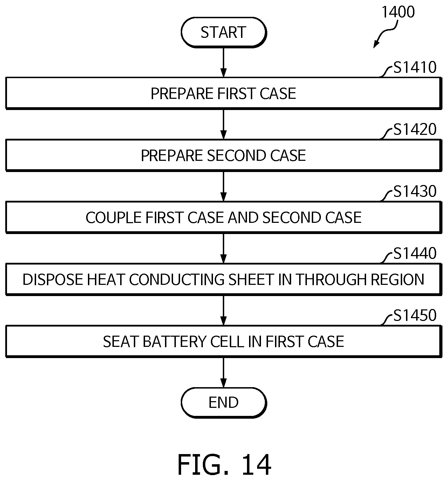

FIG. 14 illustrates a flowchart showing a method 1400 of assembling a secondary battery module according to one or more embodiments of the present disclosure.

First, the assembling method 1400 may start, and a first case may be prepared (S1410) for accommodating battery cells, and may be provided with a plurality of through regions through which portions of the surfaces of the battery cells are exposed. Here, the first case may include an insulating material. Further, each of the through regions may correspond to a single battery cell. In another example, each of the through regions may correspond to two or more battery cells. In another example or in addition, each of the battery cells may correspond to two or more through regions.

According to an embodiment, the through regions may be provided in the first case, such that the area of the through regions is smaller than the area of first surfaces of the battery cells. According to some embodiments, the through regions may be provided in the first case, such that the length of long sides of the through regions is shorter than the length of long sides of first surfaces of the battery cells, and the length of short sides of the through regions is shorter than the length of short sides of the first surfaces of the battery cells.

A second case may be prepared (S1420) to have an internal space to receive at least a portion of the first case. Here, the second case may include (e.g., may be made of) a metal having a high thermal conductivity.

The first case and the second case may be coupled together (S1430), such that the first case is received in the internal space provided in the second case.

Heat conducting sheets (e.g., heat conducting members) may be disposed in each of the through regions of the first case (S1440). Here, the heat conducting members may include (e.g., may be made of) a suitable material having a high thermal conductivity.

The battery cells may be seated in the first case (S1450), so that the battery cells are disposed in the through regions, and the method 1400 may end.

According to one or more embodiments, the battery cells may be seated in the first case, such that first surfaces of the heat conducting members are in direct contact with portions of the surfaces of the battery cells exposed through the through regions. In this case, second surfaces of the heat conducting members may be in contact with the second case.

Embodiments are set out in the following clauses:
Clause 1. A battery module comprising:
   a first battery cell;
   a first case configured to accommodate the first battery cell and provided with a first through region allowing a portion of a surface of the first battery cell to be exposed therethrough;
   a second case configured to accommodate at least a portion of the first case; and
   a first heat conducting member disposed between the first battery cell and the second case.
Clause 2. The battery module as claimed in claim 1, wherein a first surface of the first heat conducting member is in direct contact with a portion of a surface of the first battery cell exposed through the first through region, and a second surface of the first heat conducting member is in contact with the second case.
Clause 3. The battery module as claimed in claim 1, wherein the first heat conducting member is disposed in the first through region of the first case.
Clause 4. The battery module as claimed in claim 1, wherein an area of the first through region is smaller than an area of a first surface of the first battery cell.
Clause 5. The battery module as claimed in claim 1, wherein a length of a long side of the first through region is shorter than a length of a long side of a first surface of the first battery cell, and
   a length of a short side of the first through region is shorter than a length of a short side of the first surface of the first battery cell.
Clause 6. The battery module as claimed in claim 1, wherein the first case is configured to accommodate a plurality of battery cells,
   the first case is provided with the through regions,
   each of the through regions corresponds to a single battery cell, and
   the heat conducting member is disposed in each of the through regions.
Clause 7. The battery module as claimed in claim 1, wherein the first case is configured to accommodate a plurality of battery cells,
   the first case is provided with the through regions,
   each of the through regions corresponds to two or more battery cells, and
   the heat conducting member is disposed in each of the through regions.
Clause 8. The battery module as claimed in claim 1, wherein a thickness of the first heat conducting member is thicker than a thickness of the first case provided with the first through region.
Clause 9. The battery module as claimed in claim 1, wherein the first case comprises an insulating material.
Clause 10. The battery module as claimed in claim 1, wherein the second case comprises a metal.
Clause 11. The battery module as claimed in claim 1, further comprising:
   a second battery cell; and
   a second heat conducting member disposed between the second battery cell and the second case,
   wherein the second case is provided with a second through region allowing a portion of a surface of the second battery cell to be exposed therethrough.
Clause 12. A method of assembling a battery module, the method comprising:
   preparing a first case accommodating a battery cell and provided with a through region allowing a portion of a surface of the battery cell to be exposed therethrough;
   preparing a second case provided with an internal space accommodating at least a portion of the first case;
   coupling the first case and the second case together so that the first case is seated in an internal space of the second case;
disposing a heat conducting member in the through region of the first case; and
seating the battery cell in the first case so that the battery cell is disposed on the through region.
Clause 13. The method as claimed in claim 12, wherein, in the seating of the battery cell in the first case, the battery cell is seated in the first case so that a first surface of the heat conducting member is in direct contact with a portion of a surface of the battery cell exposed through the through region, and
   a second surface of the heat conducting member is in contact with the second case.
Clause 14. The method as claimed in claim 12, wherein, in the preparing of the first case,
   the through region is formed in the first case so that an area of the through region is smaller than an area of a first surface of the battery cell.
Clause 15. The method as claimed in claim 12, wherein, in the preparing of the first case,
   the through region is formed in the first case so that a length of a long side of the through region is shorter than a length of a long side of a first surface of the battery cell and a length of a short side of the through region is shorter than a length of a short side of the first surface of the battery cell.
Clause 16. The method as claimed in claim 12, wherein the first case is configured to accommodate a plurality of battery cells,
   the first case is provided with the through regions,
   each of the through regions corresponds to a single battery cell, and
   the heat conducting member is disposed in each of the through regions.
Clause 17. The method as claimed in claim 12, wherein the first case is configured to accommodate a plurality of battery cells,
   the first case is provided with the through regions,
   each of the through regions corresponds to two or more battery cells, and
   the heat conducting member is disposed in each of the through regions.
Clause 18. The method as claimed in claim 12, wherein a thickness of the first heat conducting member is thicker than a thickness of the first case provided with the first through region.
Clause 19. The method as claimed in claim 12, wherein the first case comprises an insulating material.
Clause 20. The method as claimed in claim 12, wherein the second case comprises a metal.

Although the present disclosure has been described with reference to embodiments and drawings illustrating aspects thereof, the present disclosure is not limited thereto. Various modifications and variations can be made by a person skilled in the art to which the present disclosure belongs within the scope of the present disclosure and the claims and their equivalents, below.

### Description of Reference Symbols

- 100:: battery module
- 110:: battery cell
- 120:: heat conducting member
- 130:: first case
- 140:: second case

## Claims

1. A battery module (800) comprising:
a first battery cell (812);
a first case (130, 410) configured to accommodate the first battery cell (812), and having a first through region (832) to expose a portion of a surface of the first battery cell (812) therethrough;
a second case (140, 420) configured to accommodate at least a portion of the first case (130, 410); and
a first heat conducting member (822) between the first battery cell (812) and the second case (140, 420).

2. The battery module (800) as claimed in claim 1, wherein a first surface of the first heat conducting member (822) is in direct contact with a portion of a surface of the first battery cell (812) exposed through the first through region (832), and a second surface of the first heat conducting member (822) is in contact with the second case (140, 420).

3. The battery module (800) as claimed in claim 1 or claim 2, wherein the first heat conducting member (822) is located in the first through region (832) of the first case (130, 410).

4. The battery module (800) as claimed in any one of the preceding claims, wherein an area of the first through region (832) is smaller than an area of a first surface of the first battery cell (812).

5. The battery module (800) as claimed in any one of the preceding claims, wherein a length of a long side of the first through region (832) is shorter than a length of a long side of a first surface of the first battery cell (812), and
wherein a length of a short side of the first through region (832) is shorter than a length of a short side of the first surface of the first battery cell (812).

6. The battery module (800) as claimed in any one of the preceding claims, wherein the first case (130, 410) is configured to accommodate a plurality of battery cells (810) comprising the first battery cell (812),
wherein the first case (130, 410) has a plurality of through regions (832, 834) comprising the first through region (832),
wherein each of the through regions (832, 834) corresponds to a single battery cell from among the plurality of battery cells (810), and
wherein a plurality of heat conducting members (820) comprising the first heat conducting member (822) is located in the through regions (832, 834), respectively.

7. The battery module (800) as claimed in any one of claims 1 to 5, wherein the first case (130, 410) is configured to accommodate a plurality of battery cells (810) comprising the first battery cell (812),
wherein the first case (130, 410) has a plurality of through regions (832, 834, 912, 922, 932) comprising the first through region (832),
wherein each of the through regions (832, 834, 912, 922, 932) corresponds to two or more battery cells from among the plurality of battery cells (810), and
wherein a plurality of heat conducting members (820) comprising the first heat conducting member (822) is located in the through regions (832, 834, 912, 922, 932), respectively.

8. The battery module (800) as claimed in any one of the preceding claims, wherein a thickness of the first heat conducting member (822) is thicker than a thickness of the first case (130, 410) having the first through region (832).

9. The battery module (800) as claimed in any one of the preceding claims, wherein the first case (130, 410) comprises an insulating material.

10. The battery module (800) as claimed in any one of the preceding claims, wherein the second case (140, 420) comprises a metal.

11. The battery module (800) as claimed in any one of the preceding claims, further comprising:
a second battery cell (814); and
a second heat conducting member (824) between the second battery cell (814) and the second case (140, 420),
wherein the second case (140, 420) has a second through region (834) to expose a portion of a surface of the second battery cell (814) therethrough.

12. A method of assembling a battery module (800), the method comprising:
preparing a first case (130, 410) for accommodating a battery cell (812), and having a through region (832) to expose a portion of a surface of the battery cell (812) therethrough;
preparing a second case (140, 420) having an internal space for accommodating at least a portion of the first case (130, 410);
coupling the first case (130, 410) and the second case (140, 420) together so that the first case (130, 410) is seated in the internal space of the second case (140, 420);
disposing a heat conducting member (822) in the through region of the first case (130, 410); and
seating the battery cell (812) in the first case (130, 410) to be disposed on the through region (832).

13. The method as claimed in claim 12, wherein, in the seating of the battery cell (812) in the first case (130, 410), a first surface of the heat conducting member (822) is in direct contact with a portion of a surface of the battery cell (812) exposed through the through region (832), and a second surface of the heat conducting member (822) is in contact with the second case (140, 420).

14. The method as claimed in claim 12 or claim 13, wherein, in the preparing of the first case (130, 410), the through region (832) is formed in the first case (130, 410) so that an area of the through region (832) is smaller than an area of a first surface of the battery cell (812).

15. The method as claimed in ant one of claims 12 to 14, wherein, in the preparing of the first case (130, 410), the through region (832) is formed in the first case (130, 410) so that a length of a long side of the through region (832) is shorter than a length of a long side of a first surface of the battery cell (812), and a length of a short side of the through region (832) is shorter than a length of a short side of the first surface of the battery cell (812).
